# Europäisches Patentamt
# European Patent Office
# Office européen des brevets

(19)

(11) Veröffentlichungsnummer: **0 021 389**
**B1**

(12) **EUROPÄISCHE PATENTSCHRIFT**

(45) Veröffentlichungstag der Patentschrift:
**29.01.86**

(51) Int. Cl.⁴: **B 41 J 3/04**

(21) Anmeldenummer: **80103518.9**

(22) Anmeldetag: **23.06.80**

(54) **Tintendruckeinrichtung zum Bedrucken eines Aufzeichnungsträgers.**

(30) Priorität: **26.06.79 DE 2925812**

(43) Veröffentlichungstag der Anmeldung:
**07.01.81 Patentblatt 81/1**

(45) Bekanntmachung des Hinweises auf die Patenterteilung:
**29.01.86 Patentblatt 86/5**

(84) Benannte Vertragsstaaten:
**CH FR GB IT LI NL SE**

(56) Entgegenhaltungen:
**AU - A - 430 929**
**FR - A - 2 122 148**
**GB - A - 1 564 572**
**US - A - 3 476 874**
**US - A - 3 564 120**
**US - A - 3 967 286**

**PATENTS ABSTRACTS OF JAPAN, Band 3, Nr. 106, 7. September 1979, Seite 96 E 135**
**COMPUTER DESIGN, Band 17, Nr. 7, Juli 1978, Seiten 104-106 J. HEINZL et al.: "Ink-jet printer mechanism uses non-static vacuum technique"**

(73) Patentinhaber: **Siemens Aktiengesellschaft, Berlin und München Wittelsbacherplatz 2, D-8000 München 2 (DE)**

(72) Erfinder: **Heinzl, Joachim, Prof. Dr., Dreisesselbergstrasse 16, D-8000 München 90 (DE)**

## Beschreibung

Die Erfindung bezieht sich auf eine Tintendruckeinrichtung zum Bedrucken eines Aufzeichnungsträgers entsprechend dem Oberbegriff des Patentanspruchs 1.

Aus der DE-OS 2 543 451 ist eine Tintendruckeinrichtung bekannt, bei der ein Tintendruckkopf mit mehreren Düsen vorgesehen ist. Der Tintendruckkopf enthält eine Mehrzahl von Düsenkanälen, die mit den Düsen verbunden sind und die von piezoelektrischen Antriebselementen zylinderförmig umschlossen sind. Beim Anlegen einer Spannung an die piezoelektrischen Antriebselemente wird in den Düsenkanälen eine Stosswelle erzeugt und aus der Düse wird Tinte tröpfchenförmig auf einen Aufzeichnungsträger ausgestossen. Die Tinte ist in einem Tintenbehälter enthalten und wird den Düsenkanälen über eine Versorgungsleitung, Filter, eine gemeinsame Vorratskammer und eine mit engen Öffnungen versehene Drosselplatte zugeführt. Eine derartige Tintendruckrichtung ist auch aus einer Veröffentlichung Heinzl, J.; Rosenstock, G.: Lautloser Tintendruck für Schreibstationen, Siemens-Z. 51 (1977), S. 219–221 bekannt.

Der Tintendruckkopf ist bei der bekannten Tintendruckeinrichtung an einem längs einer Schreibwalze bewegbaren Schreibwagen angeordnet und der Aufzeichnungsträger wird in axialer Richtung der Schreibwalze mit alphanumerischen Zeichen bedruckt. Am Ende der Zeile kehrt der Schreibwagen in seine Ausgangsstellung zurück und der Aufzeichnungsträger wird um einen Zeilenabstand verschoben und anschliessend erneut in Zeilenrichtung bedruckt.

Unter Verwendung der bekannten Tintendruckeinrichtung kann der Aufzeichnungsträger nur mit einer einzigen Farbe, beispielsweise schwarz, bedruckt werden. Häufig ist jedoch eine mehrfarbige Darstellung von alphanumerischen Zeichen oder grafischen Mustern wünschenswert. Es wäre denkbar, zur mehrfarbigen Darstellung auf dem Aufzeichnungsträger mehrere, beispielsweise drei Tintendruckköpfe nebeneinander anzuordnen, die Tintentröpfchen der Farben magentarot, gelb und cyanblau ausstossen und nacheinander auf den Aufzeichnungsträger aufbringen. Eine derartige Anordnung hat jedoch den Nachteil, dass sie einen sehr grossen Aufwand erfordert, dass die Tintendruckköpfe sehr viel Platz beanspruchen und dass sie sehr viel Masse aufweisen, die beim Druckvorgang beschleunigt und verzögert werden muss.

Aus der Fr-A-2 122 148 ist eine Tintendruckeinrichtung bekannt, die einen Tintendruckkopf mit einer Mehrzahl von Druckelementen besitzt. Zum mehrfarbigen Bedrucken eines Aufzeichnungsträgers können einzelnen Druckelementen auch Tinten unterschiedlicher Farbe zugeführt werden. Die Anordnung der Tintenbehälter, die Zuordnung der einzelnen Druckelemente zu den verschiedenen Tintenbehältern und die Art, in der der Aufzeichnungsträger bedruckt wird, sind dort nicht angegeben.

Weiterhin ist aus der US-A-3 476 874 eine Tintendruckeinrichtung bekannt, die nur ein einziges Druckelement enthält. Beim mehrfarbigen Bedrucken eines Aufzeichnungsträgers werden die entsprechenden verschiedenfarbigen Tinten gemischt und anschliessend ausgestossen. Durch diese bekannte Tintendruckeinrichtung wird jeweils nur eine einzige Linie auf dem Aufzeichnungsträger gedruckt, so dass die Darstellung eines mehrfarbigen grafischen Musters verhältnismässig lange Zeit dauert. Infolge der Mischung der Tinten unterschiedlicher Farbe vor dem Ausstossen sind bei der bekannten Druckeinrichtung beim Wechsel von Farben Übergangsphasen vorhanden, so dass mit dieser bekannten Tintendruckeinrichtung keine scharfen Konturen dargestellt werden können.

Die AU-A-430 929 sowie die US-A-3 404 221 offenbaren Tintendruckeinrichtungen, bei denen der Aufzeichnungsträger um eine ständig rotierende Walze gelegt wird. In axialer Richtung der Walze wird mit geringer Geschwindigkeit ein Tintendruckkopf bewegt, so dass der Aufzeichnungsträger in Umfangsrichtung der Walze linienweise bedruckt wird. Die Vorschubgeschwindigkeit des Tintendruckkopfs in axialer Richtung der Walze ist dabei so bemessen, dass jeweils nach einer Umdrehung der Walze Linie für Linie nebeneinander gedruckt werden. In Umfangsrichtung der Walze sind an dem Tintendruckkopf Druckelemente vorgesehen, die Tinten unterschiedlicher Farbe ausstossen, um die jeweilige Linie zu bilden. Das Bedrucken des Aufzeichnungsträgers erfolgt bei diesen bekannten Tintendruckeinrichtungen somit nicht zeilenweise von oben nach unten, entsprechend der Darstellung des Textes an einer Schreibstation, sondern linienweise von links nach rechts durch senkrecht zu den Zeilen angeordneten Linien.

Der Erfindung liegt die Aufgabe zugrunde, eine Tintendruckeinrichtung anzugeben, die auf einfache Weise und unter weitgehender Verwendung eines für ein zeilenweises Bedrucken eines Aufzeichnungsträgers vorgesehenen bekannten Tintendruckkopfes mehrfarbige Darstellungen auf einem Aufzeichnungsträger ermöglicht.

Erfindungsgemäss wird die Aufgabe bei der Tintendruckeinrichtung der eingangs genannten Art durch die im kennzeichnenden Teil des Patentanspruches 1 angegebenen Merkmale gelöst.

Die Tintendruckeinrichtung gemäss der Erfindung hat den Vorteil, dass sie einen geringen Aufwand erfordert, da auch für eine mehrfarbige Darstellung auf dem Aufzeichnungsträger nur ein einziger Tintendruckkopf erforderlich ist. Die Anordnung kann kostengünstig aufgebaut werden, da ein für einen einfarbigen Druck vorgesehener und bekannter Tintendruckkopf lediglich dahingehend abgeändert werden muss, dass anstelle einer Vorratskammer für alle Düsen bzw. Düsenkanäle jeweils für die vorgegebene Anzahl von Düsen bzw. Düsenkanälen eine eigene Vorratskammer vorhanden sein muss. Anstelle des einzigen Tintenbehälters werden dann mehrere Tintenbehälter verwendet, die über die Versorgungsleitungen mit den Vorratskammern verbunden sind. Die Anordnung erfordert auch einen geringeren Raumbedarf, da nur ein einziger Tintendruckkopf benötigt wird.

Ein besonders einfacher Aufbau des Tintendruckkopfs wird erreicht, wenn die jeweils mit Tinte gleicher Farbe versorgten Düsen übereinander benachbart angeordnet sind. Die mit Tinte gleicher Farbe versorgten Düsen können unmittelbar übereinander angeordnet sein, oder, wie bei dem bekannten Tintendruckkopf, in zwei parallelen Linien versetzt angeordnet sein.

Um Druckstösse der Tinte beim Beschleunigen des Tintendruckkopfs zu vermeiden, ist es vorteilhaft, wenn die Tintenbehälter an der Rückseite des Tintendruckkopfs senkrecht zum Aufzeichnungsträger hintereinander angeordnet sind.

Für eine mehrfarbige Darstellung auf dem Aufzeichnungsträger ist es vorteilhaft, wenn drei Tintenbehälter am Tintendruckkopf angeordnet sind, die Tinten mit den Grundfarben magentarot, gelb und cyanblau enthalten. Falls die Darstellung entsprechend einem Vierfarbendruck erfolgen soll, ist es erforderlich, dass ein weiterer Tintenbehälter am Tintendruckkopf angeordnet ist, der Tinte schwarzer Farbe enthält.

Falls ein bekannter Tintendruckkopf mit zwölf Düsen für eine mehrfarbige Darstellung von grafischen Mustern auf dem Aufzeichnungsträger abgeändert wird, ist es günstig, wenn jeweils vier übereinander benachbarte Düsen mit einem Tintenbehälter verbunden sind.

Entsprechend dem Bedrucken eines Aufzeichnungsträgers bei einer Schreibstation ist es zweckmässig, wenn der Vorschub des Aufzeichnungsträgers jeweils am Ende einer Zeile erfolgt. Der Aufzeichnungsträger kann dabei in Vor- und/oder Rückwärtsrichtung bedruckt werden. Falls der Aufzeichnungsträger nur in Vorwärtsrichtung bedruckt wird, kann es von Vorteil sein, wenn der Vorschub des Aufzeichnungsträgers während des Druckvorgangs und während des Rücklaufs kontinuierlich erfolgt.

Im folgenden wird ein Ausführungsbeispiel der Tintendruckeinrichtung gemäss der Erfindung anhand von Zeichnungen erläutert. Es zeigen:

Fig. 1 ein Schnittbild eines Druckwerks zum Drucken von mehrfarbigen graphischen Mustern auf einem Aufzeichnungsträger,

Fig. 2 eine Frontansicht einer Düsenplatte eines Tintendruckkopfs.

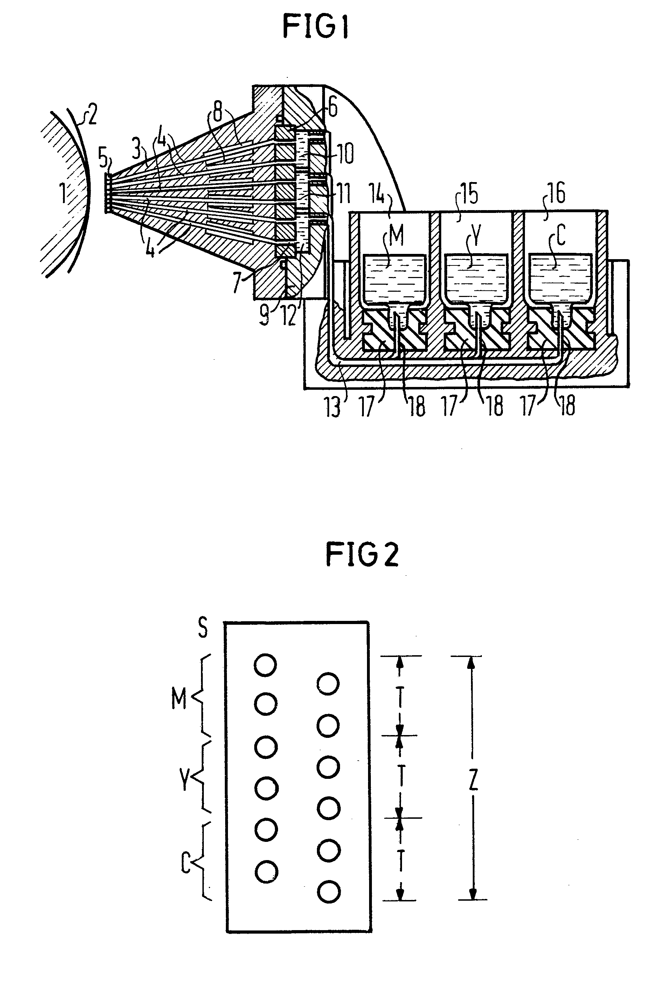

Ein in Fig. 1 dargestellter Tintendruckkopf und zugehörige Tintenbehälter können am Schreibwagen einer bekannten Schreibstation anstelle eines alphanumerische Zeichen druckenden Tintendruckkopfs angeordnet sein. Wie in der bekannten Schreibstation bewegt sich der Tintendruckkopf längs einer Schreibwalze 1, um einen um diese gelegten Aufzeichnungsträger 2 zu bedrucken. Im Gegensatz zu bekannten Tintendruckköpfen, mit denen alphanumerische Zeichen in einer Farbe, vorzugsweise schwarz, auf den Aufzeichnungsträger 2 gedruckt werden, sind bei dem dargestellten Druckwerk sowohl alphanumerische Zeichen als auch graphische Muster, wie beispielsweise Halbtonbilder, auf dem Aufzeichnungsträger 2 mehrfarbig darstellbar.

Der Tintendruckkopf besteht aus einem ersten Kunststoffteil 3, das mehrere Düsenkanäle 4 enthält. Beispielsweise enthält der Tintendruckkopf 12 Düsenkanäle 4, die in zwei Ebenen angeordnet sind, wovon in der Fig. 1 nur die einer Ebene dargestellt sind. Die Düsenkanäle 4 laufen in den beiden Ebenen strahlenförmig auseinander. Sie enden auf der einen Seite in einer Düsenplatte 5, die zwölf Düsen enthält, aus denen Tintentröpfchen auf parallelen Bahnen zum Aufzeichnungsträger 2 ausgestossen werden. An den anderen Enden der Düsenkanäle 4 ist eine Drosselplatte 6 vorgesehen, die enge Kanäle 7 aufweist, über die Tinten den Düsenkanälen 4 zugeführt werden. Die Düsenkanäle 4 werden konzentrisch von piezokeramischen Wandlern 8 umschlossen. Beim Anlegen einer Spannung an einen oder mehrere der Wandler 8 wird in dem entsprechenden Düsenkanal 4 eine Stosswelle erzeugt und über die Düsenplatte 5 werden aus den entsprechenden Düsen Tintentröpfchen ausgestossen. Über in einem zweiten Kunststoffteil 9 vorgesehene Vorratskammern 10 bis 12 werden die Düsenkanäle 4 mit Tinten versorgt. Beispielsweise werden bei dem Tintendruckkopf mit zwölf Düsen jeweils vier übereinander benachbart angeordnete Düsen mit Tinte gleicher Farbe versorgt. Die Vorratskammern 10 bis 12 sind über Versorgungsleitungen 13 mit den Tintenbehältern 14 bis 16 verbunden. Die Tintenbehälter 14 bis 16 sind in Richtung senkrecht zum Aufzeichnungsträger 2 hintereinander angeordnet, um Druckstösse beim Beschleunigen des Druckwerks längs der Schreibwalze 1 zu vermeiden. Die topfförmigen Tintenbehälter 14 bis 16 weisen am Boden Gummiformteile 17 auf, die beim Einsetzen der Tintenbehälter durch jeweils eine Hohlnadel 18 durchstochen werden, um die Verbindung zum Tintendruckkopf herzustellen. Im Verbindungsweg zwischen den Tintenbehältern 14 bis 16 und den Düsenkanälen 4 sind hier nicht dargestellte Filtereinsätze vorgesehen, die Schutzteilchen in den Tinten zurückhalten. In den Tintenbehältern 14 bis 16 sind Tinten M, Y und C mit den Farben magentarot, gelb und cyanblau eingefüllt. Die Tinte M mit der Farbe magentarot wird über die Vorratskammer 10 den obersten Düsen zugeführt, während die Tinte Y mit der Farbe gelb über die Vorratskammer 11 den mittleren Düsen und die Tinte C mit der Farbe cyanblau über die Vorratskammer 12 den untersten Düsen zugeführt wird. Weitere Einzelheiten werden im folgenden im Zusammenhang mit Fig. 2 beschrieben.

Bei der in Fig. 2 dargestellten Frontansicht der Düsenplatte 5 sind die in zwei parallelen Reihen angeordneten Düsen zu erkennen. Aus den obersten vier Düsen wird die Tinte M mit der Farbe magentarot ausgestossen, während aus den mittleren vier Düsen die Tinte Y mit der Farbe gelb und aus den untersten vier Düsen die Tinte C mit der Farbe cyanblau ausgestossen wird. Falls das Tintendruckwerk in einer zeilenweise druckenden Schreibstation eingesetzt wird, bei der der Aufzeichnungsträger 2 um die Schreibwalze 1 gelegt ist und der Tintendruckkopf zeilenweise längs der Schreibwalze 1 bewegt wird und der Aufzeichnungsträger 2 senkrecht zur Druckrichtung verschoben wird, entspricht die Gesamtheit der Düsen einer Zeile Z. Während der Bewegung des Tintendruckkopfs längs der Schreibwalze 1 wird auf dem Aufzeichnungsträger 2 somit eine Zeile Z dargestellt, die aus drei Teilzeilen T mit den Farben magentarot, gelb und cyanblau besteht. Anschliessend wird nach jedem Ende des Drucks einer Zeile Z der Aufzeichnungsträger 2 um die Breite einer Teilzeile T verschoben, so dass der Aufzeichnungsträger 2 an allen Stellen mit den Farben magentarot, gelb und cyanblau bedruckbar ist.

Durch die Verschiebung des Aufzeichnungsträgers 2 um jeweils eine Teilzeile T ist es somit nicht nur möglich, den Aufzeichnungsträger 2 in den Grundfarben magentarot, gelb und cyanblau zu bedrucken, sondern es ist auch möglich, durch Übereinanderdrucken die sich aus der Mischung dieser Grundfarben in bekannter Weise ergebenden Farben darzustellen. So werden beispielsweise zur Darstellung einer grünen Farbe die Farben cyanblau und gelb übereinandergedruckt, zur Darstellung einer violetten Farbe die Farben magentarot und cyanblau übereinandergedruckt und zum Darstellen der Farbe rot die Farben magentarot und gelb übereinandergedruckt. Die Halbtonwerte werden dabei durch die Anzahl der übereinandergedruckten und/oder nebeneinander gedruckten Punkte pro Flächeneinheit dargestellt. Die Tintendruckeinrichtung kann den Aufzeichnungsträger 2 zeilenweise in Vorwärtsrichtung und/oder in Rückwärtsrichtung bedrucken. In jedem Fall muss sichergestellt sein, dass am Ende einer Zeile Z ein Vorschub um die Teilzeile T erfolgt. Es besteht auch die Möglichkeit, den Aufzeichnungsträger 2 nur während der Bewegung des Tintendruckkopfs in einer Richtung zu bedrucken und den Aufzeichnungsträger 2 während des Bedruckens und während des Rücklaufs kontinuierlich um eine Teilzeile T zu verschieben.

Falls, entsprechend einem Vierfarbendruck, neben den Grundfarben magentarot, gelb und cyanblau noch zusätzlich die Farbe schwarz gedruckt werden soll, ist ein weiterer Tintenbehälter erforderlich, der Tinte schwarzer Farbe enthält und der ebenfalls mit einer vorgegebenen Anzahl von Düsen verbunden ist. Bei der Verwendung des Tintendruckkopfs mit 12 Düsen würden dann beispielsweise jeweils drei Düsen Tinte gleicher Farbe ausstossen. In entsprechender Weise wird dann jede Teilzeile T durch drei Düsen und jede Zeile Z aus vier Teilzeilen T gebildet.

**Patentansprüche**

1. Tintendruckeinrichtung zum Bedrucken eines Aufzeichnungsträgers, bei der ein Tintendruckkopf vorgesehen ist, der mehrere Düsen enthält, aus denen Tintentröpfchen auf den zu bedruckenden Aufzeichnungsträger ausgestossen werden, bei der der Aufzeichnungsträger zwischen aufeinanderfolgenden Druckvorgängen senkrecht zur Druckrichtung verschiebbar ist, so dass die einzelnen Bereiche des Aufzeichnungsträgers nacheinander den Druckelementen gegenüberstehen, dadurch gekennzeichnet, dass jeweils mehrere einander benachbarte Druckelemente über jeweils eine Versorgungsleitung (13) mit jeweils einem Tinte (M, Y, C) unterschiedlicher Farbe enthaltenden Tintenbehälter (14 bis 16) verbunden sind, dass die Druckelemente, die Tinten (M, Y, C) gleicher Farbe ausstossen, unmittelbar nebeneinanderliegende Linien gleicher Farbe darstellen, die ihrerseits gleichfarbige Teilzeilen (T) des darzustellenden Musters bilden und dass der Aufzeichnungsträger (2) zwischen aufeinanderfolgenden Druckvorgängen um die Höhe einer Teilzeile (T) verschiebbar ist, so dass die einzelnen Bereiche des Aufzeichnungsträgers (2) nacheinander den Tinten unterschiedlicher Farbe führenden Druckelementen gegenüberstehen.

2. Tintendruckeinrichtung nach Anspruch 1, dadurch gekennzeichnet, dass die jeweils mit Tinten (M, Y, C) gleicher Farbe versorgten Düsen der Druckelemente längs zweier paralleler Reihen übereinander und in der Höhe versetzt nebeneinander angeordnet sind.

3. Tintendruckeinrichtung nach Anspruch 1 oder Anspruch 2, dadurch gekennzeichnet, dass die Tintenbehälter (14 bis 16) auf dem Schreibwagen senkrecht zum Aufzeichnungsträger (2) hintereinander angeordnet sind und dass die Versorgungsleitungen (13) senkrecht zum Aufzeichnungsträger (2) verlaufen.

4. Tintendruckeinrichtung nach einem der Ansprüche 1 bis 3, dadurch gekennzeichnet, dass drei Tintenbehälter (14 bis 16) am Tintendruckkopf angeordnet sind, die Tinten (M, Y, C) mit den Grundfarben magentarot, gelb und cyanblau enthalten.

5. Tintendruckeinrichtung nach Anspruch 4, dadurch gekennzeichnet, dass ein weiterer Tintenbehälter am Tintendruckkopf angeordnet ist, der Tinte schwarzer Farbe enthält.

6. Tintendruckeinrichtung nach einem der Ansprüche 1 bis 4, bei der der Tintendruckkopf zwölf Düsen enthält, dadurch gekennzeichnet, dass jeweils vier übereinander benachbart angeordnete Düsen mit einem Tintenbehälter (14 bis 16) verbunden sind.

7. Tintendruckeinrichtung nach einem der Ansprüche 1 bis 6, dadurch gekennzeichnet, dass der Vorschub des Aufzeichnungsträgers (2) jeweils am Ende einer Zeile (Z) erfolgt.

8. Tintendruckeinrichtung nach einem der Ansprüche 1 bis 6, dadurch gekennzeichnet, dass der Vorschub des Aufzeichnungsträgers (2) während des Druckvorganges und während des Rücklaufs des Tintendruckkopfs kontinuierlich erfolgt.

**Claims**

1. An ink printing device for the printing of a recording support, in which an ink printing head is provided containing a plurality of nozzles from which ink droplets are emitted onto the recording support to be printed, and in which the recording support is displaceable between consecutive printing operations at right angles to the printing direction, so that the individual regions of the recording support are successively opposite the printing elements, characterised in that in each case, a plurality of adjacent printing elements are connected by way of a respective supply line (13) to respective ink reservoirs (14 to 16) which contain inks (M, Y, C) of different colours; that the printing elements which emit inks (M, Y, C) of the same colours produce immediately adjacent lines of the same colour which for their part form part lines (T) of the same colour of the pattern to be produced; and that the recording support (3) is displaceable between consecutive printing operations by the height of a part line (T), so that the individual regions of the recording support (2) are successively opposite the printing elements which carry inks of different colours.

2. An ink printing device as claimed in Claim 1, characterised in that the nozzles of the printing elements which are respectively supplied with inks (M, Y, C) of different colours, are arranged along two parallel rows above one another and beside one another so as to be staggered as regards height.

3. An ink printing device as claimed in Claim 1 or Claim 2, characterised in that the ink reservoirs (14 to 16) are arranged one behind the other on the printing carriage at right angles to the recording support (3); and that the supply lines (13) extend at right angles to the recording support (2).

4. An ink printing device as claimed in one of Claims 1 to 3, characterised in that three ink reservoirs (14 to 16) are arranged on the ink printing head which contain inks (Y, M, C) having the primary colours magenta red, yellow and cyan blue.

5. An ink printing device as claimed in Claim 4, characterised in that a further ink reservoir which contains black ink is arranged on the ink printing head.

6. An ink printing device as claimed in one of Claims 1 to 4, wherein the ink printing head comprises twelve nozzles, characterised in that four nozzles which are arranged so as to be adjacent above one another are in each case connected to an ink reservoir (14 to 16).

7. An ink printing device as claimed in one of Claims 1 to 6, characterised in that forward feeding of the recording support (2) is in each case carried out at the end of a line (Z).

8. An ink printing device as claimed in one of Claims 1 to 6, characterised in that the forward feeding of the recording support (2) is carried out continuously during the printing operation and the return travel of the ink printing head.

**Revendications**

1. Dispositif d'impression à encre pour imprimer un support d'enregistrement, sur lequel est prévue une tête d'impression à encre qui contient plusieurs tuyères d'où des gouttelettes d'encre sont éjectées sur le support d'enregistrement à imprimer, avec lequel le support d'enregistrement est déplaçable perpendiculairement au sens d'impression entre des opérations d'impression successives, de sorte que les différentes zones du support d'enregistrement se trouvent l'une après l'autre en face des éléments d'impression, caractérisé en ce que plusieurs éléments d'impression voisins sont chaque fois reliés par une conduite d'alimentation commune (13) à l'un de plusieurs réservoirs d'encre (14 à 16) contenant des encres (M, Y, C) de couleurs différentes, que les éléments d'impression éjectant de l'encre (M, Y, C) de même couleur produisent des lignes de même couleur situées directement les unes à côté des autres et qui forment elles-mêmes des lignes partielles (T) de même couleur du motif à représenter et que le support d'enregistrement (2) est déplaçable de la hauteur d'une ligne partielle (T) entre deux opérations d'impression, de sorte que les différentes zones du support d'enregistrement (2) se trouvent l'une après l'autre en face d'éléments d'impression éjectant de l'encre de couleurs différentes.

2. Dispositif selon la revendication 1, caractérisé en ce que les tuyéres alimentées en encre (M, Y, C) de même couleur des éléments d'impression sont disposées les unes au-dessus des autres en deux rangées parallèles et en étant décalées en heuteur d'une rangée à l'autre.

3. Dispositif selon la revendication 1 ou 2, caractérisé en ce que les réservoirs d'encre (14 à 16) sont disposés sur le chariot d'impression, l'un derrière l'aute dans le sens perpendiculaire au support d'enregistrement (2), et que les conduites d'alimentation (13) s'étendent perpendiculairement au support d'enregistrement (2).

4. Dispositif selon une des revendications 1 à 3, caractérisé en ce que trois réservoirs d'encre (14 à 16) contenant des encres (M, Y, C) des couleurs fondamentales magenta, jaune et cyane sont disposés sur la tête d'impression.

5. Dispositif selon la revendication 4, caractérisé en ce qu'un réservoir supplémentaire contenant de l'encre de couleur noire est disposé sur la tête d'impression.

6. Dispositif selon une des revendications 1 à 4, dont la tête d'impression contient douze tuyères, caractérisé en ce que chaque fois quatre tuyères disposées l'une au-dessus de l'autre sont reliées à un réservoir d'encre (14 à 16).

7. Dispositif selon une des revendications 1 à 6, caractérisé en ce que l'avance du support d'enregistrement (2) s'effectue chaque fois à la fin d'une ligne (Z).

8. Dispositif selon une des revendications 1 à 6, caractérisé en ce que l'avance du support d'enregistrement (2) s'effectue en continu pendant l'opération d'impression et pendant le retour de la tête d'impression.

# FIG 1

# FIG 2